# EUROPEAN PATENT APPLICATION

(11) **EP 1 533 915 A1**
(43) Date of publication of application: **25.05.2005**
(21) Application number: 03026485.7
(22) Date of filing: 20.11.2003
(51) Int. Cl.: H04B 7/005, H04B 1/38, H01Q 1/24

(54) **A method for adjusting the transmission power of a radio transmitter, and a device for the same**

(71) Applicant: SIEMENS AKTIENGESELLSCHAFT, 80333 München (DE)
(72) Inventor: Stichelbout, Thomas, DK-9000 Aalborg (DE)

(57) **Abstract**

A device (101) for adjusting the transmission power of a radio transmitter (10), comprising power setting means (133) responsive to detecting means (131) for detecting the proximity of a user and adapted to: lower the transmission power of the radio transmitter (10) with a predefined step (□-P) when the user is in the proximity of the radio transmitter (10); or increase the transmission power of the radio transmitter (10) with a predefined step (□+P) when the user is not in the proximity of the radio transmitter (10).

Said power setting means (133) are adapted to select the predefined step (δ-P; δ+P)) in such a manner that the transmission power of the transmitter (10) belongs to a same power class (PCL) as before lowering or increasing the transmission power.

## Description

### Field of the invention

The invention relates to power control in radio transmitters, especially when the user is in the proximity of the radio transmitter.

### Background of the invention

In the area of radio transmitters, one of the greatest concerns has been the sensitivity of human tissue to electromagnetic radiation. For example, in current mobile communications devices in the 900 MHz or 1800 MHz bands, radio waves in the microwave spectrum typically having a wavelength of 8 to 16 cm are used. Even though no results showing any adverse effects have been obtained yet, most device manufacturers have been considering different measures for reducing absorption rates.

One possible way to reduce absorption is to decrease the average power level of the transmitter. European Patent application 1 298 809 shows one good possibility aimed to reduce the Specific Absorption Rate SAR. A proximity detector is used to detect the presence of the user. If the user is not in the proximity of the device, it can be assumed that the absorption rate is low, so that the average transmission power of the transmitter does not need to be reduced. In the opposite case, the power level is reduced but only to a point necessary to maintain adequate signal strength.

In other words, the transmission power of the radio transmitter is lowered with a predefined step when the user is in the proximity of the radio transmitter; or
increased with a predefined step when the user is not in the proximity of the radio transmitter.

Typically, the mobile terminal selects the transmitter power level as commanded by a Base Station BS or Radio Network Controller RNC of the mobile network under the coverage area of which the mobile terminal is roaming. The selection of an adequate power level is not too straightforward a task because of the relative complexity of a cellular Radio Access Network RAN. For example, inter-channel interference is a topic which has to be addressed. Therefore the radio transmission and reception has been standardized. 3GPP TS 45.005 V5.2.0 is the standard for GSM/EDGE, for example. A mobile terminal has to be in conformity to relevant standards.

Therefore it still remains a problem to further reduce the SAR caused by a radio transmitter, especially such that as used in a mobile communications device, in such a manner that conformity to the relevant standard still can be obtained.

### Summary of the invention

It is an object of the present invention to bring about a device and method for adjusting the transmission power of a radio transmitter, by using which the SAR can be further reduced.

The object of the invention can be achieved by using a device or method as defined in independent claims 1 and 8. The dependent claims define various advantageous aspects of the invention.

A further object of the present invention is to bring about a portable communication device in accordance to claim 7, the mobile communication device comprising the device as defined above.

### Advantages of the invention

By selecting the predefined step with which the transmission power of the radio transmitter is lowered in such a manner that the transmission power of the transmitter belongs to same power class as before lowering or increasing the transmission power the SAR can be reduced while still maintaining conformity with the specification and reducing the extra messaging and work at the RAN. In most cases the RAN does not need to define a new power class for the transmitter, this saving processing effort. Further, the such calculated power class does not need to be transmitted to the transmitter, therefore saving also signalling in the air interface.

When the user is not any more in the proximity of the transmitter, the transmission power can be increased in a similar manner as well. The advantages are essentially similar.

Further, by inhibiting the lowering or increasing of the transmission power if the lowering or increasing would lead to change of the transmission power causing a change in the power class of the radio transmitter, the probability of an unnecessary power class change by the RAN can be reduced. This helps further to reduce the SAR value, because the resulting higher new power class determined by the RAN could result in increasing the SAR.

When the predefined step is calculated as a function of current power and a current power class, whereby predefined power level limit depending on current power class or a value derived therefrom is used, the target power level can be reached faster. This can be used for further reducing of SAR.

### Description of the figures

In the following, some advantageous embodiments of the invention are discussed in more detail with reference to examples shown in the appended drawings in Figures 1 to 6, of which:
- Figure 1: shows the transmission power in dBm vs. power class and how the predefined step can be selected;
- Figure 2: shows the transmission power of a radio transmitter as a function of time;
- Figure 3: shows some functional blocks of a mobile communications device that are relevant for transmitting;
- Figure 4A: is a flow chart showing how the transmission power can be changed;
- Figure 4B: is a flow chart showing how the predefined step can be selected;
- Figure 5A, 5B, and 5C: show different ways in which the transmission power can be changed; and
- Figure 6: shows how at least two detectors for detecting the proximity of the user can be implemented to a mobile communications device.

Same reference numerals refer to similar structural elements throughout the Figures.

### Detailed Description

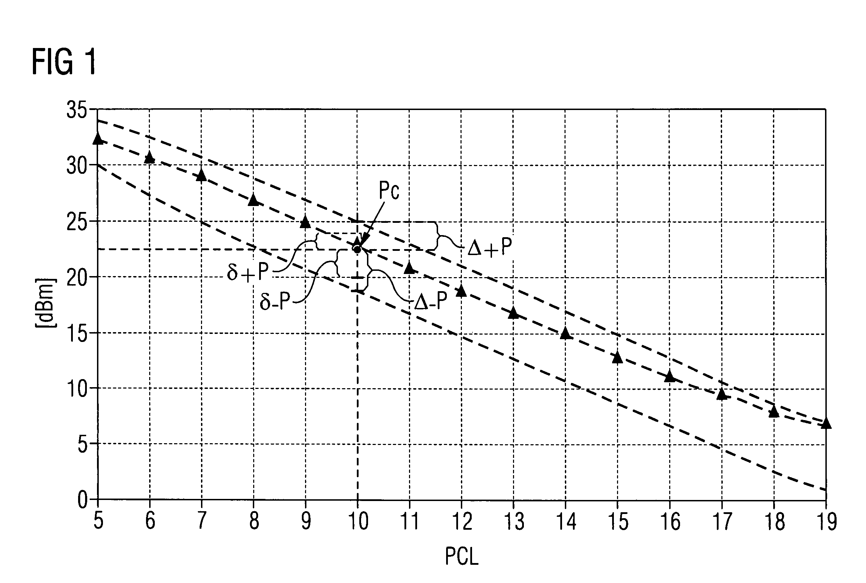

In Figure 1 the dashed line with triangles shows which path the current transmission power P_{c} of a radio transmitter in dBm would follow as a function of power class PCL. The upper and lower dotted lines show a band defining predefined power level limits [P_{c} - Δ₋P; P_{c} + Δ₊P] for each PCL value. These values can be taken from a standard defining the requirements for a transmitter.

For a given PCL value, the power P must be selected from the band shown as dotted lines. The main principle of the present invention is that if the user is in the proximity of the transmitter, then the transmitter power P is obtained by reducing the current transmission power P_{c} by a predefined step δ₋P, or if the user is not in the proximity of the transmitter, than the transmitter power P is obtained by increasing the current transmission power P_{c} by a predefined step δ₊P.

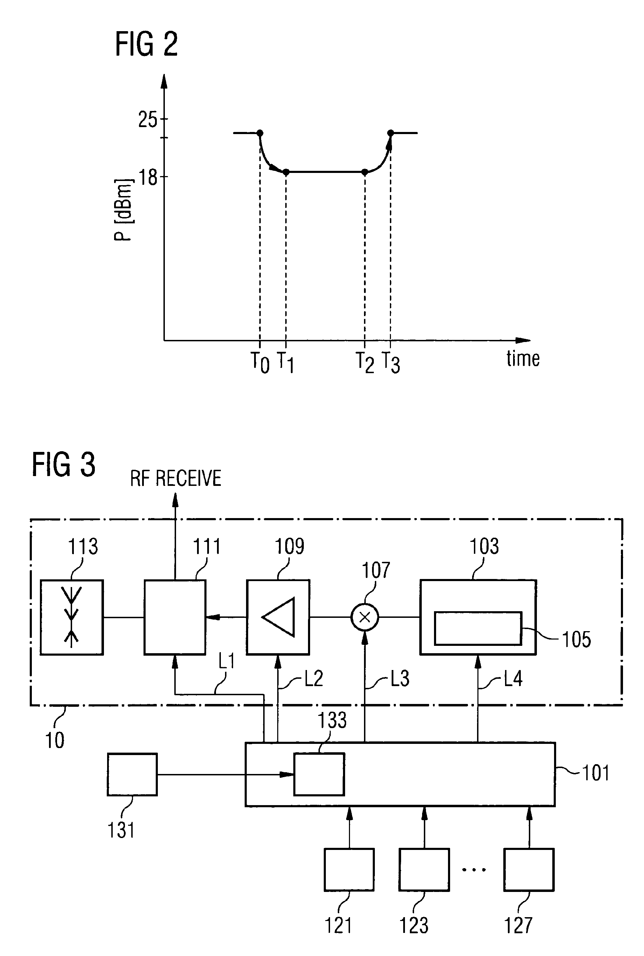

Figure 2 shows the transmission power of a GSM 900 radio transmitter as a function of time for an example case where the power class of the transmitter is 10. Before T₀ the transmission power P of the transmitter is 22 dBm. At T₀ the detecting means for detecting the proximity of a user detect that the user is in the proximity of the transmitter. Therefore a predefined step δ₋P is selected and then the transmission power P is lowered by the predefined step δ₋P. At T₁ the transmission power has reached the new value of 18 dBm. At T₂ detecting means for detecting the proximity of a user detect that the user is not any more in the proximity of the transmitter. Therefore a predefined step δ₊P is selected and then the transmission power P is increased by the predefined step δ₊P. At T₃ the transmission power P has reached the new value which in this case corresponds to the initial value of 22 dBm. The power class is not changed from the transition between T₀ and T₁.

Figure 3 shows some functional blocks of a mobile communications device that are relevant for transmitting. The main functional components of the transmitter 10 are further expanded in more detail.

The central unit 101 controls the operation of the tranmsitter 10 through different control channels of which L1, L2, L3, and L4 are shown in Figure 3.

Control channel L1 is used for selecting the match of the matching circuit 111 for the antenna 113. Control channel L2 is used for defining the ramp shape, power level, and switch signal of the power amplifier 109. Control channel L3 provides the modulator 107 with with I and Q signal.

Control channel L4 is the frequency control channel which takes control over the voltage of the Voltage Controlled Oscillator VCO 105 in the Phase-Locked Loop PLL 103.

The central unit 101 is connected to a number of input devices. Examples of such input devices include microphone 121, keyboard 123, and camera 127.

The central unit 101 is further connected to means 131 for detecting the proximity of a user. In the central unit 101 there are power setting means 133 that are adapted to lower the transmission power of the radio transmitter 10 with a predefined step δ₋P when the user is in the proximity of the radio transmitter 10; or to increase the transmission power of the radio transmitter 10 with a predefined step δ₊P when the user is not in the proximity of the radio transmitter 10.

According to the invention, the power setting means 133 are adapted to select the predefined step δ₋P or δ₊P in such a manner that the transmission power of the transmitter 10 belongs to a same power class PCL as before lowering or increasing the transmission power.

According to a further aspect of the invention, said power setting means 133 are adapted to inhibit the lowering or increasing of the transmission power if the lowering or increasing would lead to change of the transmission power causing a change in the power class PCL of the radio transmitter 10.

According to a further aspect of the invention, said predefined step δ₋P or δ₊P is calculated as a function of current power P_{c} and a current power class PCL, whereby predefined power level limit Δ₊P or Δ₋P depending on current power class PCL or a value derived therefrom is used.

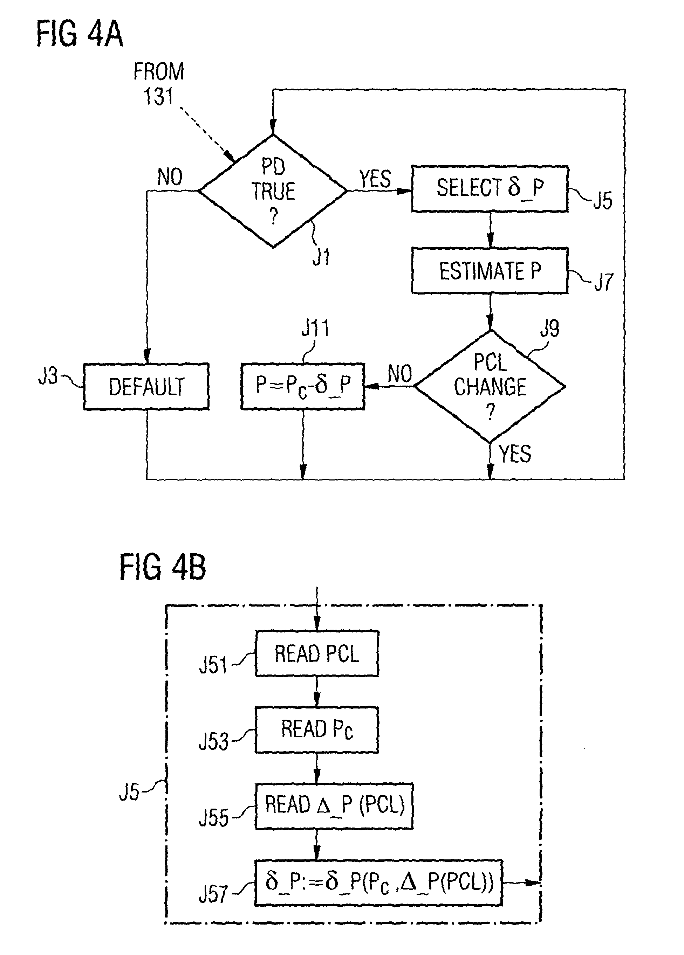

Figure 4A is a flow chart showing how the transmission power can be changed. In step J1 a proximity detection signal PD coming from means 131 for detecting the proximity of a user is analyzed. If the proximity detection signal PD is not true, the default power level corresponding the power class PCL is set in step J3, after which there is a return to step J1. In the opposite case, in step J5 a predefined step δ₋P is selected. The power P resulting is estimated in step J7. In step J9 it is checked whether or not the change of current power P_{c} to P (P = P_{c} - δ₋P) would result in change of PCL. If the PCL is not changed, then in step the new power P is set in step J11, after which there is a return to step J1. In the opposite case the power P is not changed, but there is a return to step J1.

Figure 4B shows the steps performed in step J5 in more detail. In step J51 the power class PCL is read. In step J53 the current power P_{c} is read. Then in step J55 based on the PCL the predefined power level limit Δ₋P is retrieved from memory. These values can be stored into a table, for example. In step J57 the predefined step δ₋P is computed as a function of current power P_{c} and predefined power level limit Δ₋P, or, because the Δ₋P is a function of PCL, as a function of current power P_{c} and PCL.

In other words: depending on the comparison result in step J1, the target value for the transmitted power is adjusted to a low value within the acceptable range for the present PCL as defined in the specifications, or to a middle range within the acceptable range for the present PCL as defined in the specifications. The low value does not necessarily mean the absolutely lowest acceptable value. An example of the mapping function can be δ₋P = P_{c} - *a* Δ₋P, where a is a scaling factor [0, 1]. In particular, *a* values ¼; ½; and ¾ may be used.

Figure 5A shows how the transmission power can be lowered or increased is performed by adapting the ramp shape of the power amplifier 107. The ramp generator 505 in the central unit 101 is now responsive to power setting means 133 which are in turn responsive to detecting means 131 for detecting the proximity of a user. Suitable ramp shape, i.e. average power within a burst and/or ramp rising/decaying shape is selected by the ramp generator 505 using information received from the power setting means 133.

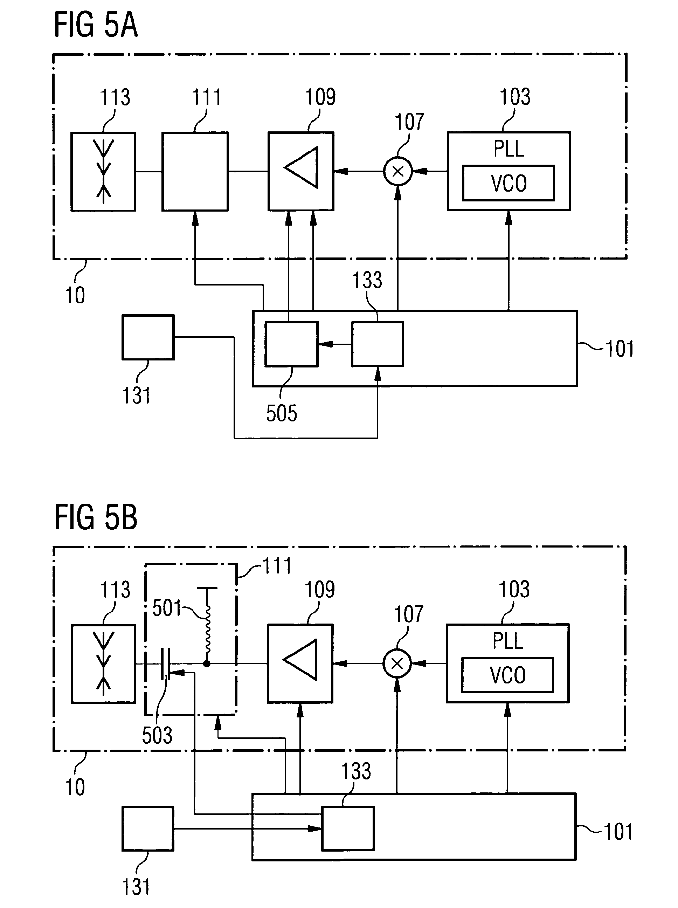

Figure 5B shows how the transmission power can be lowered or increased by changing the reflection coefficient of an antenna 113 by selecting a different antenna match 111. The antenna match 111 comprises suitable inductive elements 501 and capacitive elements 503. If the capacitive element 503 is a variable capacitor (varactor), its contorol voltage can be changed appropriately. Now the power setting means 133 responsive to detecting means 131 are adapted to control the antenna match 111 element.

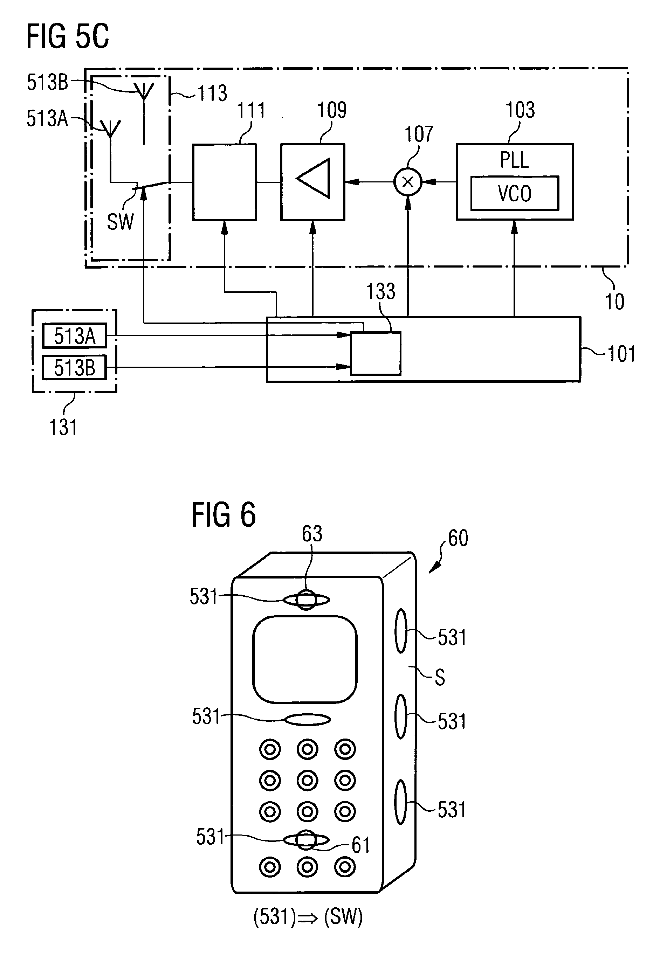

Figure 5C shows how the transmission power can be lowered or increased by selecting between a first and a second antenna 513A, 513B depending which one of the detecting means 531A, 531B detects the proximity of the user. The selecting can be done by controlling the position of the switch SW between the antennas 513A, 513B. The power setting means 133 is responsive to both the detecting means 513A, 513B. The actual number of antennas can also be larger (three, four) if this is considered beneficial.

The first antenna 513A is either located in a further away from the user than the second antenna 513B, or its radiation pattern is adapted to cause a smaller SAR to the user for example by using suitable shielding means. In the latter case there may be reflection or attenuation of the radiated signal, therefore reducing the efficiency. If the second antenna 513B is used when the user is not in the proximity of the transmitter, it may result as better efficiency of the transmitter. Efficiency is advantageous as such because it leads to smaller current consumption. Especially in portable communication devices which are operated by current obtained from a rechargeable battery a small current consumption is beneficial due to a longer operation time before recharging the battery.

Figure 6 shows a portable communication device 60 according to one aspect of the present invention. Now there is a plurality of detecting means 531 for detecting the proximity of a user. For example, there can be separate proximity detectors in the vicinity of the microphone 61a and the loudspeaker 63. Further, on a side S there may be furher detecting means 531 for detecting the proximity of a user.

The input of all detecting means 531 together can have a vector format. The vector (531) can be used to produce a switch vector (SW). Now there may be up to three antenna elements, namely one at the top and one at the bottom of the portable communication device 60. The third antenna element can be located on the side S. The positions of the switches SW selecting between these three antennas are selected to produce a smallest possible SAR value.

If the user is close to the transmitter 10 in one direction, only the transmission pattern of an array of the antennas can be adapted to avoid the given direction. This is also useful if the transmitter 10 or the portable communication device 60 is placed on a metallic surface, as the transmission pattern of the transmitter 10 can be adapted to the changed environment.

As detecting means 131 for detecting the proximity of a user any kind of detecting means can be used, especially those as listed in European Patent application 1 298 809. Further, in the case of at least two detecting means 131 in one portable communication device 60, these need not to be of the same kind. Especially, combining an impedance detecting means with an optical detecting means is proposed.

Also the transmission power of a different tranceiver (Bluetooth, IrDA, WLAN) in the portable communication device 60 can be used to provide at least a part of the sensor vector (531).

The specific communication standard which the transmitter 10 or the portable communication device 60 is adapted to follow is immaterial for understanding the invention. Basically, all GSM/EDGE/3G standards have a power classification defined, and therefore all of these standards are well usable.

## Claims

1. A device (101) for adjusting the transmission power of a radio transmitter (10), comprising power setting means (133) responsive to detecting means (131) for detecting the proximity of a user and adapted to:
- lower the transmission power of the radio transmitter (10) with a predefined step (δ₋P) when the user is in the proximity of the radio transmitter (10); or
- increase the transmission power of the radio transmitter (10) with a predefined step (δ₊P) when the user is not in the proximity of the radio transmitter (10);
**characterized in that**:
said power setting means (133) are adapted to select the predefined step (δ₋P; δ₊P) in such a manner that the transmission power of the transmitter (10) belongs to a same power class (PCL) as before lowering or increasing the transmission power.

2. A device (101) of claim 1,
**wherein**:
said power setting means (133) are further adapted to inhibit the lowering or increasing of the transmission power if the lowering or increasing would lead to change of the transmission power causing a change in the power class (PCL) of the radio transmitter (10).

3. A device (101) of claim 1 or 2,
**wherein**:
said predefined step (δ₋P; δ₊P) is calculated as a function of current power (P_{c}) and a current power class (PCL), whereby predefined power level limit (Δ₊P, Δ₋P) depending on current power class (PCL) or a value derived therefrom is used.

4. A device (101) according to claim 1, 2, or 3,
**wherein**:
the lowering or increasing of the transmission power is performed by adapting the ramp shape of the power amplifier (107).

5. A device (101) according to claim 1, 2, or 3,
**wherein**:
the lowering or increasing of the transmission power is performed by changing the reflection coefficient of an antenna (113) of the device (101) by selecting a different antenna match (111).

6. A device (101) according to claim 1, 2, or 3,
**wherein**: the power setting means (133) responsive to the detecting means (131) for detecting the proximity of the user are further:
- responsive to at least signals received from two detecting means (531A, 531B); and further
- adapted to select between a first and a second antenna (513A, 513B) depending which one of the detecting means (531A, 531B) detects the proximity of the user.

7. A portable communications device (60)
**comprising**:
a device (101) according to any one of the preceding claims 1 to 5.

8. A method for adjusting the transmission power of a radio transmitter (10) in response to detecting the proximity of a user, comprising the step of:
lowering the transmission power of the radio transmitter (10) with a predefined step (δ₋P) when the user is in the proximity of the radio transmitter (10); or
increasing the transmission power of the transmitter (10) with a predefined step (δ₊P) when the user is not in the proximity of the radio transmitter (10);
**characterized in that**:
in said step of lowering or increasing the transmission power of the radio transmitter (10), the predefined step (δ₋P; δ₊P)) is selected in such a manner that the transmission power of the radio transmitter (10) belongs to a same power class (PCL) as before lowering or increasing the transmission power.

9. A method of claim 8,
further **comprising the step of**:
inhibiting the lowering or increasing of the transmission power if the lowering or increasing would lead to change of the transmission power causing a change in the power class (PCL) of the radio transmitter (10).

10. A method according to claim 8 or 9,
**wherein**:
said predefined step (δ₋P; δ₊P) is calculated as a function of current power (P) and a current power class (PCL), whereby predefined power level limit (Δ₊P, Δ₋P) depending on current power class (PCL) or a value derived therefrom is used.

## Amended claims

### Amended claims in accordance with Rule 86(2) EPC.

**1.** A device (101) for adjusting the transmission power of a portable radio transmitter (10), comprising power setting means (133) responsive to detecting means (131) for detecting the proximity of a person using the portable radio transmitter (10) and adapted to:
- lower the transmission power of the portable radio transmitter (10) with a predefined step (δ₋P) when the person using the portable radio transmitter (10) is in the proximity of the portable radio transmitter (10); or
- increase the transmission power of the portable radio transmitter (10) with a predefined step (δ₊P) when the person using the portable radio transmitter (10) is not in the proximity of the portable radio transmitter (10);
**characterized in that**:
said power setting means (133) are adapted to select the predefined step (δ₋P; δ₊P) in such a manner that the transmission power of the portable radio transmitter (10) belongs to a same power class (PCL) as before lowering or increasing the transmission power.

**2.** A device (101) of claim 1,
**wherein:**
said power setting means (133) are further adapted to inhibit the lowering or increasing of the transmission power if the lowering or increasing would lead to change of the transmission power causing a change in the power class (PCL) of the portable radio transmitter (10).

**3.** A device (101) of claim 1 or 2,
**wherein:**
said predefined step (δ₋P; δ₊P) is calculated as a function of current power (P_{c}) and a current power class (PCL), whereby predefined power level limit (Δ₊P, Δ₋P) depending on current power class (PCL) or a value derived therefrom is used.

**4.** A device (101) according to claim 1, 2, or 3,
**wherein:**
the lowering or increasing of the transmission power is performed by adapting the ramp shape of the power amplifier (107) .

**5.** A device (101) according to claim 1, 2, or 3,
**wherein:**
the lowering or increasing of the transmission power is performed by changing the reflection coefficient of an antenna (113) of the device (101) by selecting a different antenna match (111).

**6.** A device (101) according to claim 1, 2, or 3,
**wherein:** the power setting means (133) responsive to the detecting means (131) for detecting the proximity of the person using the portable radio transmitter (10) are further:
- responsive to at least signals received from two detecting means (531A, 531B); and further
- adapted to select between a first and a second antenna (513A, 513B) depending which one of the detecting means (531A, 531B) detects the proximity of the person using the portable radio transmitter (10).

**7.** A portable communications device (60)
**comprising:**
a device (101) according to any one of the preceding claims 1 to 5.

**8.** A portable communications device (60) of claim 7, **wherein:**
said portable communications device (60) is a mobile communication device of a GSM/EDGE/3G system.

**9.** A method for adjusting the transmission power of a portable radio transmitter (10) in response to detecting the proximity of a person using the portable radio transmitter (10), comprising the step of:
lowering the transmission power of the radio transmitter (10) with a predefined step (δ₋P) when the person using the portable radio transmitter (10) is in the proximity of the portable radio transmitter (10); or
increasing the transmission power of the portable radio transmitter (10) with a predefined step (δ₊P) when the person using the portable radio transmitter (10) is not in the proximity of the portable radio transmitter (10);
**characterized in that**:
in said step of lowering or increasing the transmission power of the portable radio transmitter (10), the predefined step (δ₋P; δ₊P)) is selected in such a manner that the transmission power of the portable radio transmitter (10) belongs to a same power class (PCL) as before lowering or increasing the transmission power.

**10.** A method according to claim 9,
further **comprising the step of:**
inhibiting the lowering or increasing of the transmission power if the lowering or increasing would lead to change of the transmission power causing a change in the power class (PCL) of the portable radio transmitter (10).

**11.** A method according to claim 9 or 10,
**wherein:**
said predefined step (δ₋P; δ₊P) is calculated as a function of current power (P) and a current power class (PCL), whereby predefined power level limit (Δ₊P, Δ₋P) depending on current power class (PCL) or a value derived therefrom is used.
